# EUROPEAN PATENT SPECIFICATION

(11) **EP 2 621 123 B1**
(45) Date of publication and mention of the grant of the patent: **26.12.2018**
(21) Application number: 13152913.3
(22) Date of filing: 28.01.2013
(51) Int. Cl.: H04L 1/20, H04L 1/24, G01R 31/317, H04L 25/03

(54) **Variable inter symbol interference generator**
Verstellbarer Zwischensymbol-Interferenzgenerator
Générateur d'interférence inter-symbole variable

(30) Priority: 27.01.2012 US 201261591595 P; 24.08.2012 US 201213594369
(43) Date of publication of application: 31.07.2013
(73) Proprietor: Tektronix, Inc., Beaverton, Oregon 97077-0001 (US)
(72) Inventor: Waschura, James, Los Altos, California 94022 (US); Thandapani, Senthil Kumar, San Jose, California 95129 (US); Sauerwein, Timothy, Portland, Oregon 97229 (US)
(74) Representative: HGF Limited

(56) References cited:
- EP-A2- 2 485 427
- US-A1- 2008 228 426
- US-A1- 2009 195 498
- US-A1- 2009 195 525

## Description

### FIELD OF THE INVENTION

The present invention relates to test and measurement instruments, and more particularly to the generation of test signals with impairments.

### BACKGROUND OF THE INVENTION

Many test systems need to add inter symbol interference (ISI) as a stress source when testing serial digital receivers. This is done to emulate real-life situations where long cables and/or printed circuit board (PCB) traces add ISI into a communications link. Once added, the receiver is challenged to operate in error-free conditions despite the added impairing stress. Grading mechanisms for receivers amount to seeing how much ISI a given receiver can operate error-free with. For this reason, creating a continuously variable amount of ISI in a test system is desirable.

Continuously variable ISI has been elusive as the current state of the art employs RF switches to switch-in different lengths of PCB traces which causes a practical limitation to the number of trace length paths that can be inserted. This decreases the resolution of the varying increments of ISI. Alternatively, a large collection of fixed PCB traces can be used and manually cabled; however, this presents a problem for automatically changing between one amount of ISI stress and another.

What is needed is a variable ISI generator.

US2009/195498 A1 concerns a device and method for producing Inter Symbol Interference (ISI) scaling of S-Parameter Touchstone files for the generation of ISI scaling effects on serial data patterns by direct digital synthesis. The features of the disclosure allow user to set parameters such as data rate, voltage amplitude, encoding scheme etc. as per requirements for the serial data patterns. An ISI scaling value is selected and applied to an S-Parameter Touchstone file representing transmission path effects. The serial data pattern parameters and the ISI scaling value used with the S-Parameter Touchstone file are compiled to generate a digital data waveform record file. The digital waveform record file is applied to a waveform generation circuit for converting the digital data into an analog serial data pattern with ISI scaling effects.

US2009/195525 A1 concerns a device and method for generation of Intersymbol interference (ISI) effects on serial data by direct digital synthesis. The features of the disclosure allow user to set parameters such as data rate, voltage amplitude, encoding scheme etc. as per requirements. An ISI parameter value is selected and applied to the serial data to produce ISI effects in the serial data. Alternatively according to another feature the patterns may be set as per industry standards.

US2008/228426 A1 concerns an Arbitrary Waveform Generator having a controller programmed to generate a sequence of test waveforms using previously-defined waveform data files. The controller generates this series of test waveforms by direct synthesis to cause said each waveform to contain a respective different predetermined amount of Rj, Sj and ISI jitter components. In this way, the Arbitrary Waveform Generator produces a sequence of waveforms incorporating varying amounts of ISI to sweep said ISI jitter components from a an initial amount of ISI, for example, zero ISI, and continually increment said amount of ISI to a full unit interval of ISI in predetermined increments, for example, 0.1 UI steps.

### SUMMARY OF THE INVENTION

This invention is defined and limited by the scope of the appended claims 1-8. In the following description any embodiment(s) referred to and not falling within the scope of the appended claims, is (are) merely example(s) used for the understanding of the invention.

Embodiments of the present invention provide a variable inter symbol interference generator that generates a data signal having a variable amount of inter symbol interference by passing a data signal through (1) a programmable filter having an adjustable frequency response, and through (2) a fixed filter having a fixed frequency response such as a PCB trace, a length of cable, a discrete filter, or the like. By adjusting the parameters and therefore the insertion gain or loss of the programmable filter, and combining this with one or more fixed filters, a large range of continuously variable and finely tunable inter symbol interference amounts can be easily generated.

The objects, advantages, and other novel features of the present invention are apparent from the following detailed description when read in conjunction with the appended claims and attached drawings.

### BRIEF DESCRIPTION OF THE DRAWINGS

FIG. 1 depicts the insertion loss of a conventional 31" PCB trace.
FIG. 2 depicts an eye diagram of a data signal after passing through the 31" PCB trace of FIG. 1.
FIG. 3 depicts the insertion loss of a conventional 40" PCB trace.
FIG. 4 depicts the insertion loss of the 31" PCB trace of FIG. 1 and the insertion loss of the 40" PCB trace of FIG. 3 on the same graph for comparison.
FIG. 5 depicts an eye diagram of a data signal after passing through the 40" PCB trace of FIG. 3.
FIG. 6 depicts the frequency response of an emphasis filter, optimized to counteract the insertion loss of a 9" PCB trace, and the loss of a 9" PCB trace.
FIG. 7 depicts the insertion loss of a synthesized 31" PCB trace according to an embodiment of the present invention.
FIG. 8 depicts the insertion loss of the real 31" PCB trace of FIG. 1 and the insertion loss of the synthesized 31" PCB trace FIG. 7 on the same graph for comparison.
FIG. 9 depicts an eye diagram of a data signal after passing through the synthesized 31" PCB trace of FIG. 7.
FIG. 10 depicts a high level block diagram of a variable inter symbol interference generator according to an embodiment of the present invention.

### DETAILED DESCRIPTION OF THE INVENTION

Embodiments of the present invention provide a variable ISI generator that generates a data signal having variable amounts of ISI by passing a data signal through (1) an emphasis or de-emphasis filter having an adjustable frequency response, and through (2) a fixed filter having a fixed frequency response such as a PCB trace, a length of cable, a discrete filter, or the like.

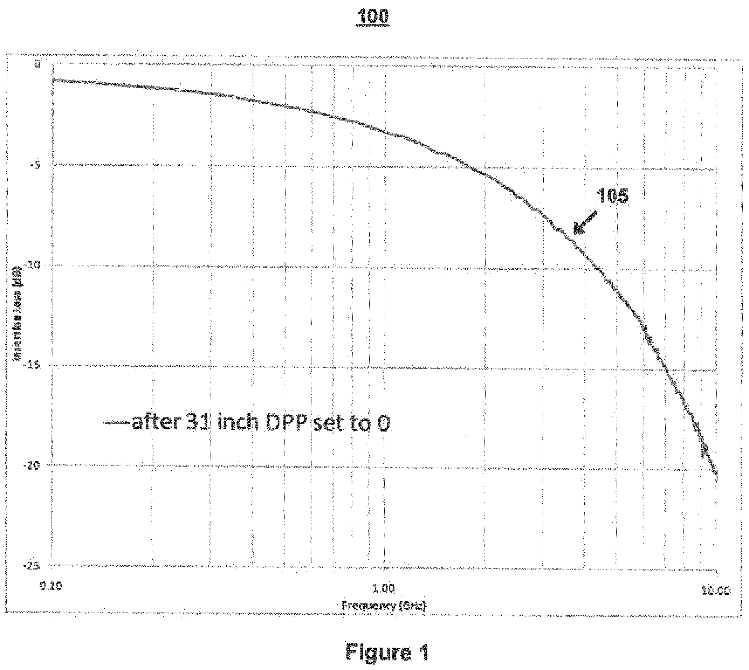

By way of explanation, consider FIG. 1, which depicts the insertion loss (or frequency response) 105 of a conventional 31" PCB trace. A PCB trace is essentially a lowpass filter because it attenuates higher frequency signals. It causes fast edges of a serial digital communication signal to slow down, which closes down the region where bit decisions can be made.

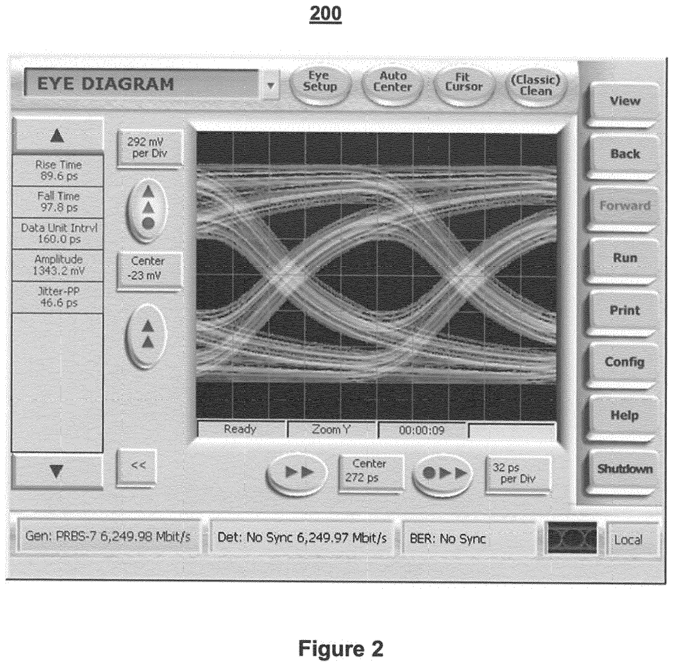

FIG. 2 depicts an eye diagram 200 of a data signal after passing through the 31" PCB trace of FIG. 1. An eye diagram is a re-traced voltage-versus-time display that is triggered to re-trace on exact data bit boundaries. This shows all of the possible voltages that exist in and around a data bit when synchronized to the bit rate. The open area in the middle of the eye diagram represents the region where correct bit decisions can be made. It is evident from FIG. 2 that the eye opening has been compromised by adding the ISI of a 31" trace.

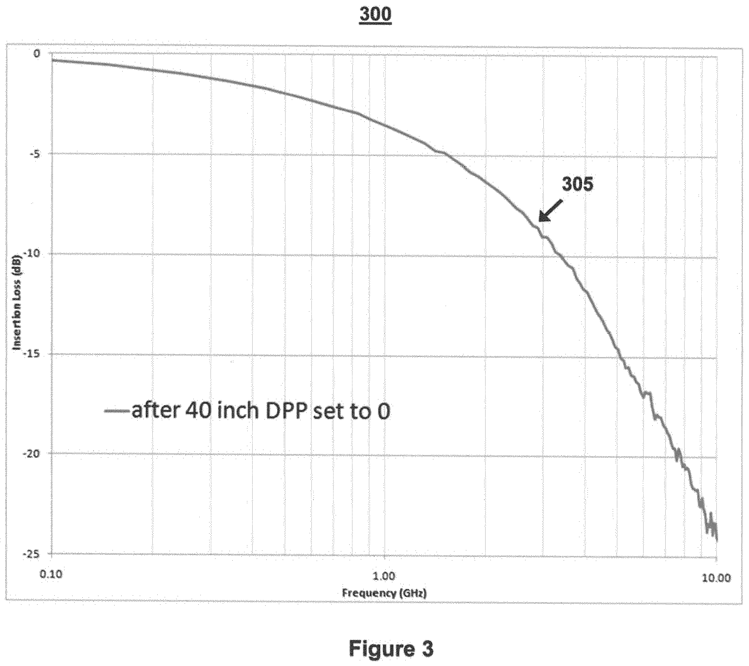

FIG. 3 depicts the insertion loss 305 of a conventional 40" PCB trace. As expected, this 40" PCB trace exhibits more loss than the 31" PCB trace of FIG. 1.

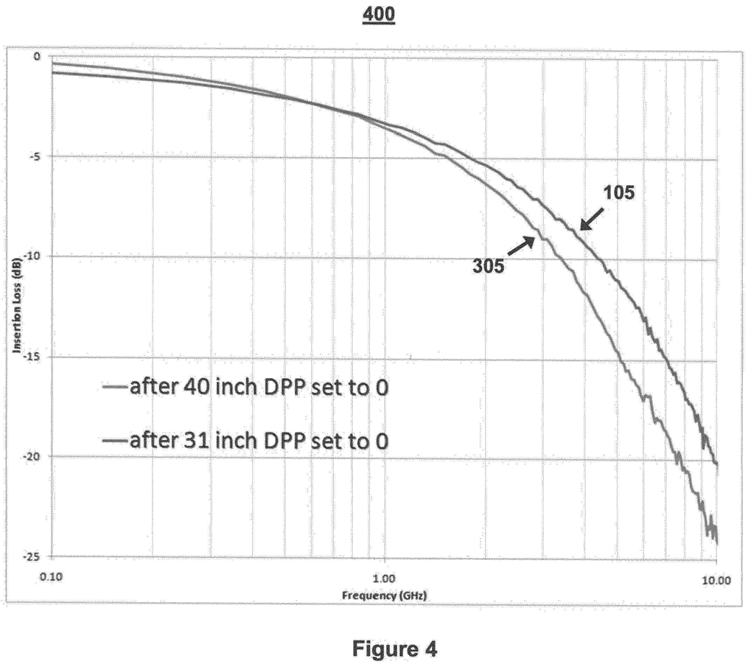

FIG. 4 depicts the insertion loss of the traces of FIG. 1 and FIG. 3 on the same graph for comparison.

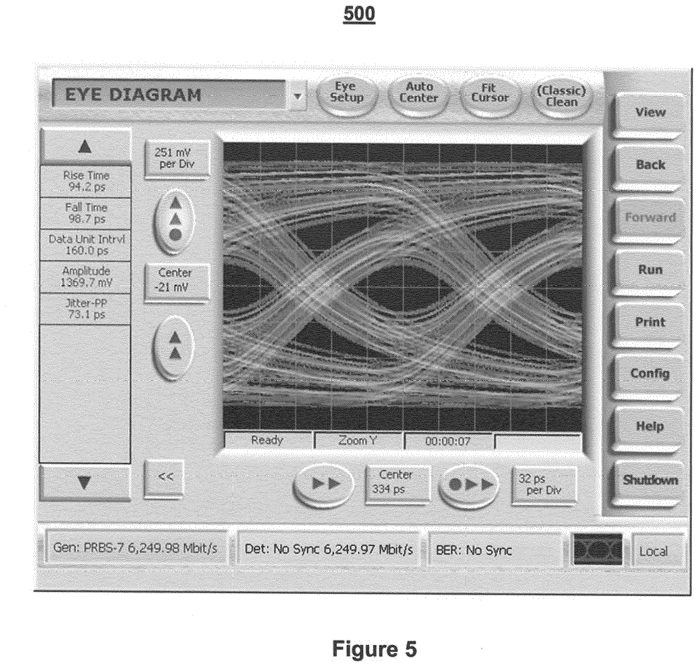

FIG. 5 depicts an eye diagram 500 of a data signal after passing through the 40" PCB trace of FIG. 3. The loss is greater for the 40" PCB trace than the 31" trace, and thus the ISI is greater as well. This causes the eye diagram of FIG. 5 to be even more compromised than the eye diagram of FIG. 2. That is, the open area of the eye diagram of FIG. 5 is smaller than the open area of the eye diagram of FIG. 2.

Now, an emphasis filter is any device that conditions a data signal by adding controllable amounts of emphasis such as the BERTScope® Digital Pre-emphasis Processor DPP Series available from Tektronix, Inc. of Beaverton, Oregon.

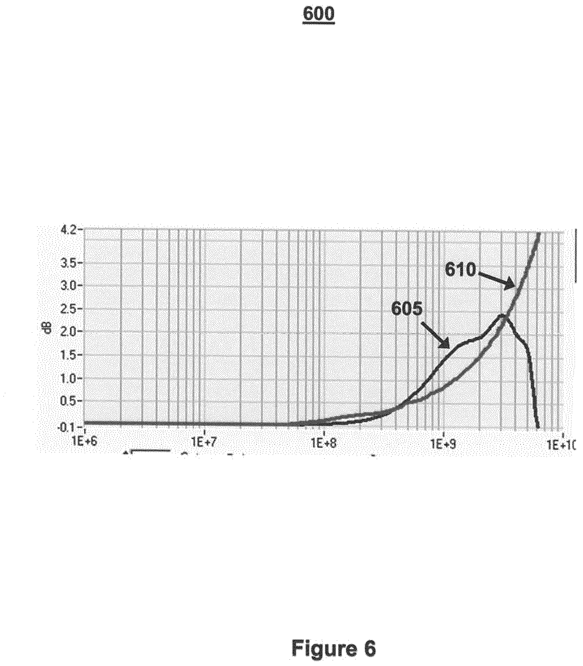

FIG. 6 depicts the insertion gain (or emphasis) 605 of an emphasis filter, where the parameters (also referred to as taps or coefficients) of the emphasis filter are optimized to approximate the gain needed to counteract the loss 610 of a 9" PCB trace. 9" is used in this example because 9" is the difference between the two traces shown in FIG. 4 (i.e., 40" - 31" = 9"). In this example, the emphasis filter is a 4-tap finite impulse response (FIR) filter with taps spaced at the bit interval, however it will be appreciated that the emphasis filter may be an infinite impulse response (IIR) filter, may use other numbers of taps or tap spacing, or may even be an analog circuit having adjustable circuit elements.

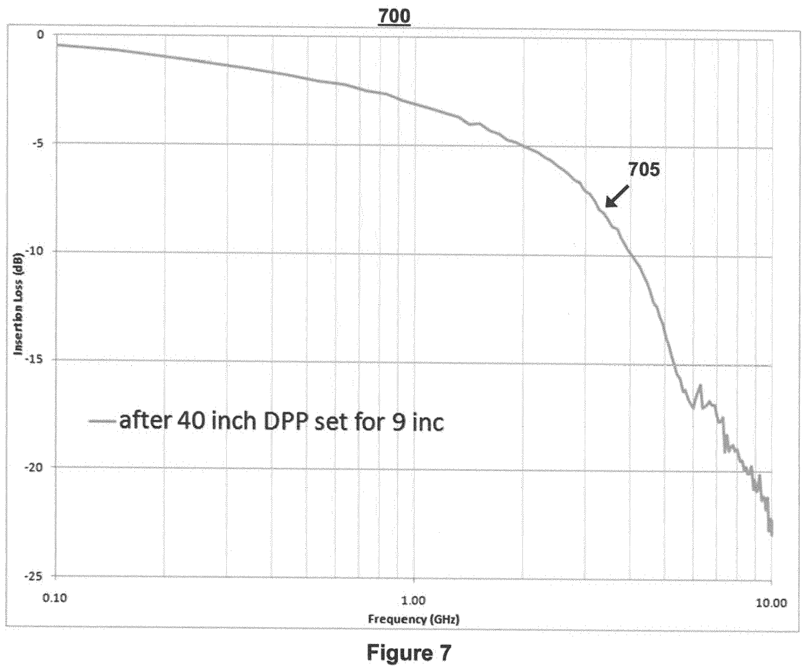

Now, in accordance with an embodiment of the present invention, the insertion gain of the 9" emphasis filter 605 is added to the insertion loss of the 40" PCB trace 305 to "synthesize" the frequency response of a 31" PCB trace 705 as shown in FIG. 7.

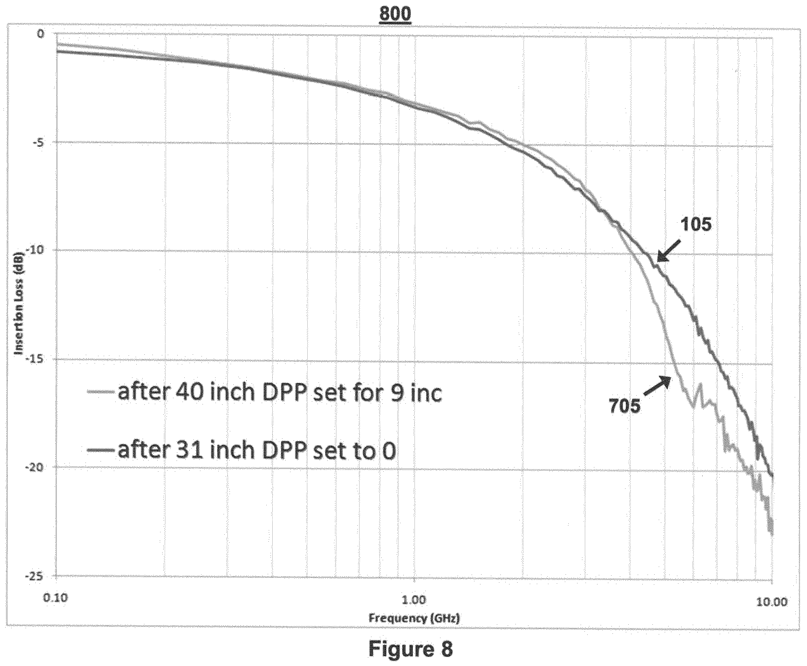

FIG. 8 depicts the frequency response of the synthesized 31" PCB trace 705 of FIG. 7 and the frequency response of the real 31" PCB trace 105 of FIG. 1 on the same graph for comparison. The synthesized frequency response 705 matches the real frequency response 105 very closely from low frequency out to several GHz. Note that very good frequency response matching at very high frequencies may not be necessary, because there is typically not much signal energy present at very high frequencies after the attenuation of cables and traces.

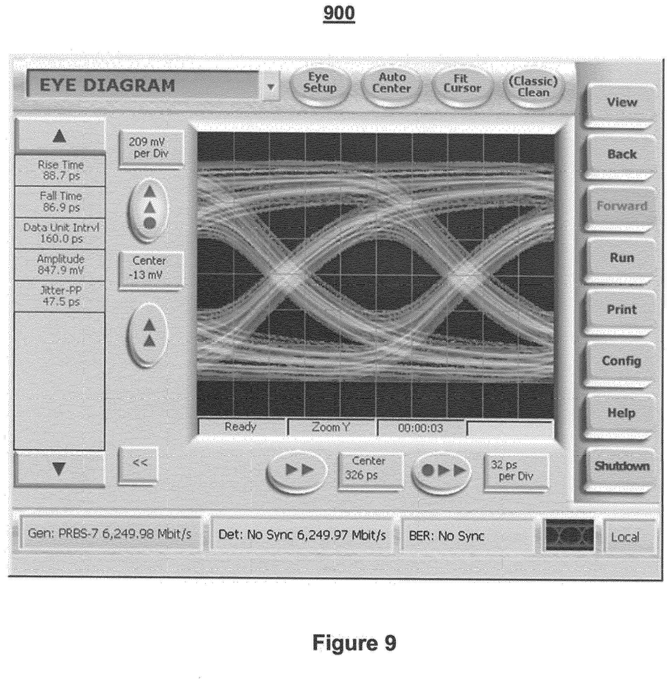

FIG. 9 depicts an eye diagram 900 of a data signal after passing through the synthesized 31" PCB trace 705 of FIG. 7. Note that the eye diagram of FIG. 9 closely approximates the eye diagram of FIG. 2, which indicates that the performance of the synthesized 31" PCB trace closely matches the performance of the real 31" PCB trace.

By adjusting the parameters and therefore the insertion gain of the emphasis filter, a large range of continuously variable and finely tunable ISI amounts can be easily generated. For example, PCB traces having lengths of 32", 33", and 34" can be synthesized by concatenating a 40" PCB trace with an emphasis filter having parameters optimized to approximate the gain needed to counteract the loss of an 8", 7", and 6" PCB trace, respectively. This is a significant improvement over state-of-the-art signal generators which require manual cabling changes and/or large and expensive RF switching arrays to accomplish the same task.

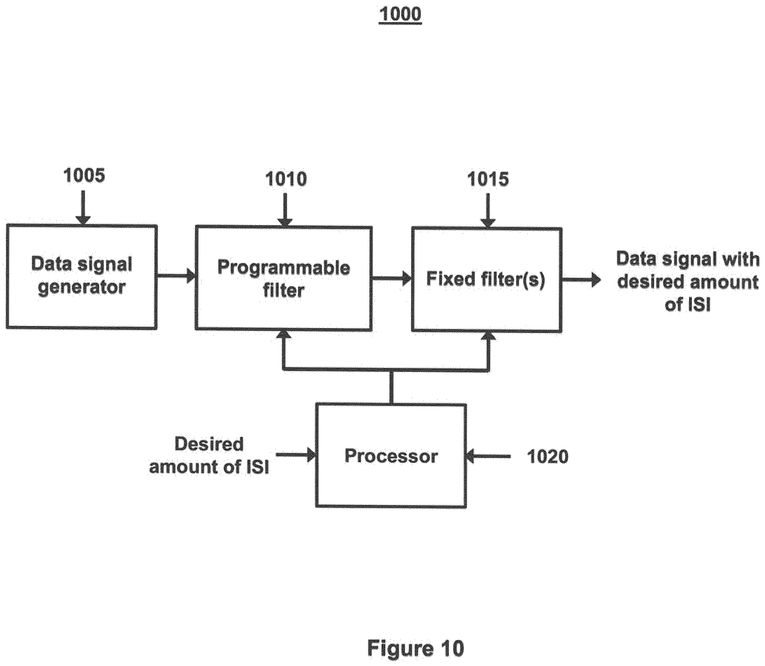

FIG. 10 depicts a variable ISI generator 1000 according to an embodiment of the present invention. A data signal generator 1005 produces a data signal. A programmable filter 1010 receives the data signal and filters it to produce an intermediate signal. In this embodiment, the programmable filter 1010 is an emphasis filter that provides a programmable amount of emphasis in response to a tuning signal. A fixed filter 1015 having a fixed insertion loss such as a PCB trace, a length of cable, a discrete filter, or the like receives the intermediate signal and filters it to produce an output signal. The overall ISI stress impairment of the output signal is the concatenation of the adjustable insertion gain of the programmable filter 1010 and the fixed insertion loss of the fixed filter 1015.

In the embodiment described above, the programmable filter 1010 is an emphasis filter that provides an adjustable amount of insertion gain to improve (i.e., boost) the frequency response of the data signal, so that the combined frequency response of the programmable filter 1010 and the fixed filter 1015 provides for less ISI than the fixed filter 1015 alone. In other embodiments, the programmable filter 1010 is a de-emphasis filter that provides an adjustable amount of insertion loss to degrade the frequency response of the data signal, so that the combined frequency response of the programmable filter 1010 and the fixed filter 1015 provides more ISI than the fixed filter 1015 alone.

In an alternative embodiment (not shown), an output of a data signal generator is first input to a fixed filter having a fixed insertion loss, and then input to a programmable filter to provide an equivalent result.

Referring back to FIG. 10, in some embodiments, a user specifies a desired amount of ISI using an input device such as a mouse, keyboard, or the like (not shown). The desired amount of ISI may be specified as, for example, an amount of loss in dB at a particular frequency. In response, a processor 1020 programs the programmable filter 1010 so that the variable ISI generator 1000 provides a data signal having the desired amount of ISI.

In some embodiments, the fixed filter 1015 comprises a plurality of fixed filters and a selection circuit (not shown). Each of the fixed filters may be a PCB trace, a length of cable, a discrete filter, or the like. The selection circuit comprises one or more switches, selectors, or the like, and can be programmed to select one of the fixed filters, or a combination of the fixed filters, in order to provide a fixed insertion loss through the fixed filter 1015. In these embodiments, the processor 1020 programs the selection circuit so that the fixed filter 1015 provides a portion of the desired amount of ISI (either less than or more than the desired amount of ISI), and programs the programmable filter 1010 to provide a residual amount of ISI (either insertion loss or gain), so that the combination of the programmable filter 1010 and the fixed filter 1015 provides the desired amount of ISI. In some embodiments, frequency response data for each of the plurality of fixed filters is stored in a memory (not shown), and the processor 1020 programs the programmable filter 1010 based on the frequency response data associated with the selected fixed filters.

It will be appreciated from the foregoing discussion that the present invention represents a significant advance in the field of test and measurement instruments. Although specific embodiments of the invention have been illustrated and described for purposes of illustration, it will be understood that various modifications may be made without departing from the scope of the appended claims. Accordingly, the invention should not be limited except as by the appended claims.

## Claims

1. A variable inter symbol interference generator for adding a user-specified amount of inter symbol interference to a data signal comprising:
a data signal generator (1005) that produces a data signal;
fixed filter means (1015) including a plurality of fixed filters and a selection circuit configured to select one of the plurality of fixed filters, or a combination of the plurality of fixed filters, in order to provide a fixed insertion loss;
a programmable filter (1010), coupled with the data signal generator (1005) and the fixed filter means (1015) in a series configuration, configured to provide insertion loss or gain; and
a processor (1020) configured to:
receive an indication of a desired amount of inter symbol interference;
program the selection circuit so that the fixed filter (1015) provides the fixed insertion loss as a portion of the desired amount of inter symbol interference; and
program the programmable filter (1010) to provide a residual amount of the desired amount of inter symbol interference so that the combination of the fixed filter means (1015) and the programmable filter (1010) produce an output signal, from the data signal, that includes the desired amount of inter symbol interference.

2. A variable inter symbol interference generator as in claim 1 wherein the programmable filter is an emphasis filter, and wherein to program the programmable filter to provide the residual amount of the desired amount of inter symbol interference is to adjust parameters of the emphasis filter to approximate an amount of gain needed to counteract the fixed insertion loss to achieve the desired amount of inter symbol interference.

3. A variable inter symbol interference generator as in claim 1 wherein the programmable filter is a de-emphasis filter, and wherein to program the programmable filter to provide the residual amount of the desired amount of inter symbol interference is to adjust parameters of the de-emphasis filter to approximate an amount of loss needed to increase the fixed insertion loss to achieve the desired amount of inter symbol interference.

4. A variable inter symbol interference generator as in claim 1 wherein the processor is arranged to program the programmable filter based on frequency response data associated with the selected fixed filters.

5. A method for adding a user-specified amount of inter symbol interference to a data signal comprising the steps of:
producing a data signal using a data signal generator;
a fixed filtering step comprising selecting one of a plurality of fixed filters of fixed filter means (1015), or a combination of the plurality of fixed filters, in order to provide a fixed insertion loss; and
a programmable filtering step to provide insertion loss or gain using a programmable filter (1010), coupled with the data signal generator and the fixed filter means in a series configuration;
a processing step performed by a processor (1020) configured to:
receive an indication of a desired amount of inter symbol interference;
program a selection circuit of the fixed filter means (1015) so that the fixed filter means (1015) provides the fixed insertion loss as a portion of the desired amount of inter symbol interference; and
program the programmable filter (1010) to provide a residual amount of the desired amount of inter symbol interference so that the combination of the fixed filter means (1015) and the programmable filter (1010) produce an output signal, from the data signal, that includes the desired amount of inter symbol interference.

6. A method as in claim 5 wherein the programmable filter is an emphasis filter and wherein to program the programmable filter to provide the residual amount of the desired amount of inter symbol interference comprises adjusting parameters of the emphasis filter to approximate an amount of gain needed to counteract the fixed insertion loss to achieve the desired amount of inter symbol interference.

7. A method as in claim 5 wherein the programmable filter is a de-emphasis filter, and wherein to program the programmable filter to provide the residual amount of the desired amount of inter symbol interference comprises adjusting parameters of the de-emphasis filter to approximate an amount of loss needed to increase the fixed insertion loss to achieve the desired amount of inter symbol interference.

8. A method as in claim 7 wherein the programming step comprises the step of programming the programmable filter based on frequency response data associated with the selected fixed filters.

## Patentansprüche

1. Verstellbarer Zwischensymbol-Interferenzgenerator zum Hinzufügen einer nutzer-spezifizierten Menge an Zwischensymbol-Interferenzen zu einem Datensignal, umfassend:
einen Datensignal-Generator (1005), der ein Datensignal erzeugt; feste Filtermittel (1015), enthaltend eine Vielzahl fester Filter und eine Auswahlschaltung, die konfiguriert ist, um einen der Vielzahl fester Filter oder eine Kombination der Vielzahl fester Filter auszuwählen, um einen festen Einfügungsverlust bereitzustellen;
einen programmierbaren Filter (1010), der mit einem Datensignalgenerator (1005) und den festen Filtermitteln (1015) in einer Reihenkonfiguration gekoppelt und konfiguriert ist, um Einfügungsverlust oder Einfügungsverstärkung bereitzustellen;
und einen Prozessor (1020), der konfiguriert ist, um:
eine Anzeige einer erwünschten Menge an Zwischensymbol-Interferenzen zu empfangen; die Auswahlschaltung so zu programmieren, dass der feste Filter (1015) einen festen Einfügungsverlust als einen Teil der erwünschten Menge an Zwischensymbol-Interferenzen bereitstellt; und den programmierbaren Filter (1010) zu programmieren, um eine Restmenge der erwünschten Menge an Zwischensymbol-Interferenzen bereitzustellen, so dass die Kombination der festen Filtermittel (1015) und des programmierbaren Filters (1010) ein Ausgangssignal aus dem Datensignal erzeugt, das die erwünschte Menge an Zwischensymbol-Interferenzen enthält.

2. Verstellbarer Zwischensymbol-Interferenzgenerator nach Anspruch 1, wobei der programmierbare Filter ein Emphasisfilter ist und wobei das Programmieren des programmierbaren Filters zum Bereitstellen der Restmenge der erwünschten Menge an Zwischensymbol-Interferenzen das Einstellen von Parametern des Emphasisfilters zum Nähern einer Menge an Verstärkung ist, die notwendig ist, um dem festen Einfügungsverlust entgegenzuwirken, um die erwünschte Menge an Zwischensymbol-Interferenzen zu erzielen.

3. Verstellbarer Zwischensymbol-Interferenzgenerator nach Anspruch 1, wobei der programmierbare Filter ein Deemphasisfilter ist und wobei das Programmieren des programmierbaren Filters zum Bereitstellen der Restmenge der erwünschten Menge an Zwischensymbol-Interferenzen das Einstellen von Parametern des Deemphasisfilters zum Nähern einer Menge an Verlust ist, die notwendig ist, um den festen Einfügungsverlust zu erhöhen, um die erwünschte Menge an Zwischensymbol-Interferenzen zu erzielen.

4. Verstellbarer Zwischensymbol-Interferenzgenerator nach Anspruch 1, wobei der Prozessor angeordnet ist, um den programmierbaren Filter basierend auf Frequenzantwortdaten, die den ausgewählten festen Filtern zugeordnet sind, zu programmieren.

5. Verfahren zum Hinzufügen einer nutzer-spezifizierten Menge an Zwischensymbol-Interferenzen zu einem Datensignal, umfassend die folgenden Schritte:
Erzeugen eines Datensignals mithilfe eines Datensignalgenerators;
einen festen Filterschritt, umfassend das Auswählen einer Vielzahl fester Filter aus festen Filtermitteln (1015) oder einer Kombination der Vielzahl fester Filter, um einen festen Einfügungsverlust bereitzustellen;
und einen programmierbaren Filterschritt, um mithilfe eines programmierbaren Filters (1010), der mit dem Datensignalgenerator und dem festen Filtermittel in einer Reihenkonfiguration gekoppelt ist, Einfügungsverlust oder Einfügungsverstärkung bereitzustellen;
einen Verarbeitungsschritt, der von einem Prozessor (1020) durchgeführt wird, der konfiguriert ist, um: eine Anzeige einer erwünschten Menge an Zwischensymbol-Interferenzen zu empfangen;
eine Auswahlschaltung der festen Filtermittel (1015) so zu programmieren, dass die festen Filtermittel (1015) den festen Einfügungsverlust als einen Teil der erwünschten Menge an Zwischensymbo linterferenzen bereitstellen;
und den programmierbaren Filter (1010) zu programmieren, um eine Restmenge der erwünschten Menge an Zwischensymbol-Interferenzen bereitzustellen, so dass die Kombination der festen Filtermittel (1015) und des programmierbaren Filters (1010) ein Ausgangssignal aus dem Datensignal erzeugen, das die erwünschte Menge an Zwischensymbol-Interferenzen enthält.

6. Verfahren nach nach Anspruch 5, wobei der programmierbare Filter ein Emphasisfilter ist und wobei das Programmieren des programmierbaren Filters zum Bereitstellen der Restmenge der erwünschten Menge an Zwischensymbol-Interferenzen das Einstellen von Parametern des Emphasisfilters zum Nähern einer Menge an Verstärkung umfasst, die notwendig ist, um dem festen Einfügungsverlust entgegenzuwirken, um die erwünschte Menge an Zwischensymbol-Interferenzen zu erzielen.

7. Verfahren nach Anspruch 5, wobei der programmierbare Filter ein Deemphasisfilter ist und wobei das Programmieren des programmierbaren Filters zum Bereitstellen der Restmenge der erwünschten Menge an Zwischensymbol-Interferenzen das Einstellen von Parametern des Deemphasisfilters zum Nähern einer Menge an Verlust umfasst, die notwendig ist, um den festen Einfügungsverlust zu erhöhen, um die erwünschte Menge an Zwischensymbol-Interferenzen zu erzielen.

8. Verfahren nach Anspruch 7, wobei der Programmierungsschritt den Schritt des Progammierens des programmierbaren Filters auf der Basis von Frequenzantwortdaten, die den ausgewählten festen Filtern zugeordnet sind, umfasst.

## Revendications

1. Générateur variable de brouillage inter-symboles pour ajouter une quantité, spécifiée par l'utilisateur, de brouillage inter-symboles à un signal de données, comprenant :
un générateur de signal de données (1005) produisant un signal de données ;
un dispositif à filtres fixes (1015) comprenant une pluralité de filtres fixes, et un circuit de sélection configuré pour sélectionner une des suivantes : une pluralité de filtres fixes, ou une combinaison de la pluralité de filtres fixes, afin de disposer d'une perte d'insertion fixe ;
un filtre programmable (1010) couplé au générateur de signal de données (1005) et au dispositif à filtres fixes (1015) dans une configuration en série, configuré pour fournir une perte ou un gain par insertion ; et
un processeur (1020) configuré pour :
recevoir une indication d'une quantité désirée de brouillage inter-symboles ;
programmer le circuit de sélection de sorte que le filtre fixe (1015) fournisse la perte par insertion fixe en tant que portion de la quantité désirée de brouillage inter-symboles ; et
programmer le filtre programmable (1010) pour fournir une quantité résiduelle de la quantité désirée de brouillage inter-symboles de sorte que la combinaison du dispositif à filtres fixes (1015) et du filtre programmable (1010) produise un signal de sortie, depuis le signal de données, comprenant la quantité désirée de brouillage inter-symboles.

2. Générateur variable de brouillage inter-symboles selon la revendication 1, le filtre programmable étant un filtre de mise en évidence, et la programmation du filtre programmable pour fournir la quantité résiduelle de la quantité désirée de brouillage inter-symboles consistant à ajuster des paramètres du filtre de mise en évidence pour se rapprocher d'une quantité de gain nécessaire pour contrer la perte par insertion fixe afin de réaliser la quantité désirée de brouillage inter-symboles.

3. Générateur variable de brouillage inter-symboles selon la revendication 1, le filtre programmable étant un filtre de désaccentuation, et la programmation du filtre programmable pour fournir la quantité résiduelle de la quantité désirée de brouillage inter-symboles consistant à ajuster des paramètres du filtre de désaccentuation pour se rapprocher d'une quantité de perte nécessaire pour augmenter la perte par insertion fixe afin de réaliser la quantité désirée de brouillage inter-symboles.

4. Générateur variable de brouillage inter-symboles selon la revendication 1, le processeur étant agencé pour programmer le filtre programmable en fonction des données de réponse en fréquence associées avec les filtres fixes sélectionnés.

5. Méthode pour ajouter une quantité de brouillage inter-symboles spécifiée par l'utilisateur à un signal de données, comprenant les étapes suivantes :
production d'un signal de données en utilisant un générateur de signal de données ;
une étape de filtrage fixe, comprenant la sélection d'une des suivantes : une pluralité de filtres fixes du dispositif à filtres fixes (1015), ou une combinaison de la pluralité de filtres fixes, afin de disposer d'une perte d'insertion fixe; et
une étape de filtrage programmable pour fournir une perte ou un gain par insertion en utilisant un filtre programmable (1010) couplé au générateur de signal de données et au dispositif à filtres fixes dans une configuration en série ;
une étape de traitement effectuée par un processeur (1020), configurée pour :
recevoir une indication d'une quantité désirée de brouillage inter-symboles ;
programmer un circuit de sélection du dispositif de filtre fixe (1015) de sorte que le filtre fixe (1015) fournisse la perte par insertion fixe en tant que portion de la quantité désirée de brouillage inter-symboles ; et
programmer le filtre programmable (1010) pour fournir une quantité résiduelle de la quantité désirée de brouillage inter-symboles de sorte que la combinaison du dispositif à filtres fixes (1015) et du un filtre programmable (1010) produise un signal de sortie, depuis le signal de données, comprenant la quantité désirée de brouillage inter-symboles.

6. Méthode selon la revendication 5, le filtre programmable étant un filtre de mise en évidence, et la programmation du filtre programmable pour fournir la quantité résiduelle de la quantité désirée de brouillage inter-symboles consistant à ajuster des paramètres du filtre de mise en évidence pour se rapprocher d'une quantité de gain nécessaire pour contrer la perte par insertion fixe afin de réaliser la quantité désirée de brouillage inter-symboles.

7. Méthode selon la revendication 5, le filtre programmable étant un filtre de désaccentuation, et la programmation du filtre programmable pour fournir la quantité résiduelle de la quantité désirée de brouillage inter-symboles comprenant l'ajustage de paramètres du filtre de désaccentuation pour se rapprocher d'une quantité de perte nécessaire pour augmenter la perte par insertion fixe afin de réaliser la quantité désirée de brouillage inter-symboles.

8. Méthode selon la revendication 7, l'étape de programmation comprenant l'étape de programmation du filtre programmable en fonction des données de réponse en fréquence associées avec les filtres fixes sélectionnés.
